# EUROPÄISCHE PATENTSCHRIFT

(11) **EP 2 125 457 B1**
(45) Veröffentlichungstag und Bekanntmachung des Hinweises auf die Patenterteilung: **05.06.2013**
(21) Anmeldenummer: 07847553.0
(22) Anmeldetag: 30.11.2007
(51) Int. Cl.: B60S 1/08, H02K 5/04

(54) **SCHEIBENWISCHERVORRICHTUNG**
WINDOW WIPER DEVICE
DISPOSITIF ESSUIE-GLACE

(30) Priorität: 29.12.2006 DE 102006061957
(43) Veröffentlichungstag der Anmeldung: 02.12.2009
(73) Patentinhaber: Robert Bosch GmbH, 70442 Stuttgart (DE)
(72) Erfinder: HUESGES, Mario, 77830 Buehlertal (DE); LAUK, Detlef, 77871 Renchen (DE)
(86) Internationale Anmeldenummer: PCT/EP2007/063037
(87) Internationale Veröffentlichungsnummer: WO 2008/080714

(56) Entgegenhaltungen:
- EP-A- 0 314 607
- EP-A- 1 179 882
- WO-A-02/19502
- WO-A-2006/037737
- DE-A1- 19 510 287
- DE-U1- 20 302 171
- US-B1- 6 431 026

## Beschreibung

Die vorliegende Erfindung betrifft eine Scheibenwischervorrichtung für Kraftfahrzeuge, insbesondere für Heckscheibenwischer mit einem Wischermotor, welcher in einem Gehäusegrundkörper eingesetzt ist, und einem Polgehäuse, in dem ein Anker drehbar gelagert ist.

Derartige Scheibenwischervorrichtungen sind beispielsweise aus der US-A-4920289, der DE 32 35 622 A1, der DE 41 16 100 A1, der DE 39 30 144 C2 sowie aus der WO 02/19502 A1 bekannt.

Bei diesem bekannten Scheibenwischervorrichtungen wird zur Lagerung der Ankerwelle in dem Polgehäuse ein Kalottenlager aus einem Sintermetall verwendet, das durch eine Federscheibe in eine Vertiefung im Polgehäuse bodenfixiert wird. Die Federscheibe ist an das Lager angepasst. Durch die Verdrehmöglichkeit der Kalotte werden die Laufeigenschaften des Wischermotors auch bei geringfügiger Schiefstellung des Ankers nicht nachteilig beeinflusst.

Nachteilig an einer solchen Scheibenwischervorrichtung ist jedoch die sehr aufwendige und damit kostspielige Montage des Kalottenlagers.

Das Dokument EP-A-485001 offenbart ein Verfahren, bei dem ein Rollenlager eines Elektromotors in eine Vertiefung in dem Gehäuse eingeschoben wird und durch ein in der Vertiefung ausgebildeten Vorsprung gehalten wird. Auch die Herstellung dieses Vorsprungs sowie der Vertiefung sind aufwendig und kostspielig.

Der Erfindung liegt daher die Aufgabe zu Grunde, eine Scheibenwischervorrichtung, insbesondere für Heckscheibenwischer eines Kraftfahrzeuges, bereitzustellen, die eine möglichst einfache Herstellung sowie Montage der Ankerwelle in dem Polgehäuse bereitstellt.

### Vorteile der Erfindung

Diese Aufgabe wird erfindungsgemäß durch die kennezeichnenden Merkmale des Anspruchs 1 gelöst.

Mit anderen Worten wird da Polgehäuse nicht wie im Stand der Technik üblich aus einem gerollten Stahlblech oder als Tiefziehteil ausgebildet, sondern aus einem einstückigen Standardmaterial hergestellt, beispielsweise in einfacher Weise abgelenkt, welches weltweit verfügbar ist.

Die Verwendung von einstückigem geschlossenem Rohrmaterial ist auch aufgrund seiner hohen mechanischen Steifigkeit und der verbesserten schwingungstechnischen und akustischen Eigenschaften zu bevorzugen. Ferner können verschiedene Längen von Polgehäusen auf einfache Weise hergestellt werden, in dem die Einstellung der abzustechenden Solllänge an der Maschine durch eine einfache Eingabe in den Computer verändert werden kann.

Aufgrund der Einfachheit des gewählten Herstellungsmaterials ist es mit sehr wenig Aufwand verbunden, das Polgehäuse mit Korrosionsschutzoberflächen zu versehen. Aufgrund des einfachen Fertigungsprozesses und der nur geringfügigen Belastung der Mantelfläche des Polgehäuses muss keine Abschätzung der Materialbelastung durch Folge Bearbeitung des Rohrmantels beachtet werden.

Das Polgehäuse kann aus Stahl, einer Keramik oder aus Sintermetall bestehen.

Erfindungsgemäß wird das Polgehäuse aus einem im kontinuierliche Verfahren hergestellten Verfahren Endlosrohr abgelenkten Rohrabschnitt gebildet. Dieser Rohrabschnitt kann aus standardmäßig vorhandenem Rohmaterial, wie beispielsweise einem Stahlrohr, hergestellt werden, welches als Stahlmaterial, nach der Länge abgestochen wird.

Zur Befestigung an der Lagerung der in dem Polgehäuse angeordneten Ankerwelle kann ein Montagelement an dem Polgehäuse befestigbar sein. In dem Montageelement kann beispielsweise eine Öffnung vorgesehen sein, welche als Lager dient.

Der Durchmesser der Öffnung in dem Montageelement kann je nach Anwendungsfall an die Abmessung der Lagerung der Ankerwelle angepasst werden, so dass jedes Zylinderlager unabhängig von dessen Aussendruchmesser in das Montageelement einsetzbar und somit in dem Polgehäuse verwendbar ist. Dies ermöglicht eine besonders flexible Zusammenstellung je nach Belastungsart und Intensität der Ankerwelle.

Das Montageelement kann entweder kappenförmig auf das Polgehäuse aufgesetzt oder aufgeschraubt werden oder in das Polgehäuse eingeschoben und darin fixiert werden. Dies kann beispielsweise durch Bildung einer Presspassung zwischen Polgehäuse und Montageelement erreicht werden.

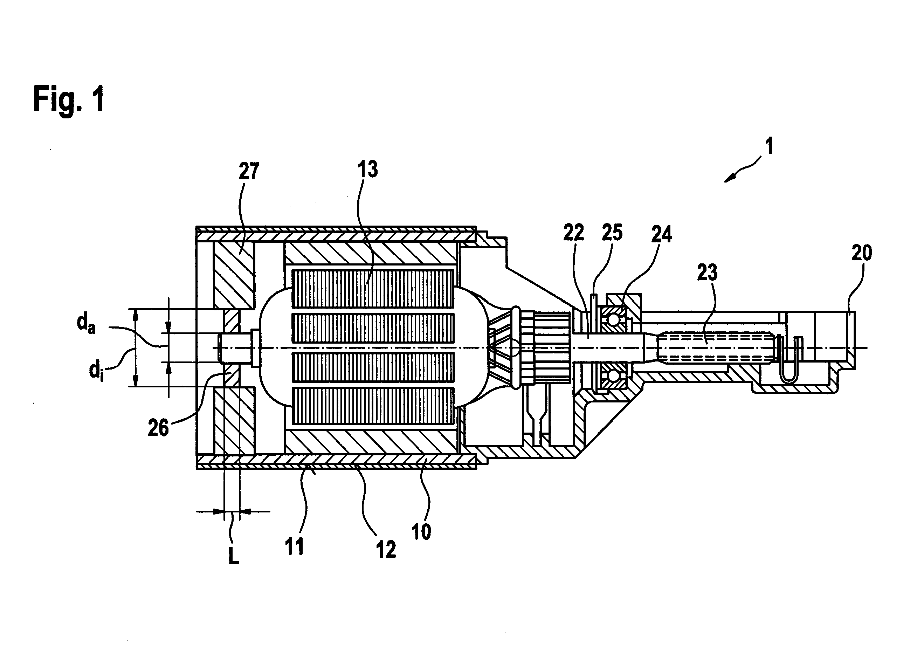

Durch die Wahl der einzelnen Bauteile kann die Montage insbesondere die Reihenfolge der Montage sehr flexibel gewählt werden. Hinsichtlich weiterer vorteilhafter Ausgestaltungen und Weiterbildungen der Erfindung wird auf die Unteransprüche und die folgende Beschreibung auf die Zeichnung verwiesen.

### Ausführungsbeispiel

Eine in der Figur dargestellte elektrische Antriebseinheit einer erfindungsgemäßen Scheibenwischervorrichtung für Kraftfahrzeuge umfasst ein im Wesentlichen topfförmiges Polgehäuse 10, welches einstückig und über den Umfang nahtfrei ausgebildet ist. Das Polgehäuse 10 ist aus einem von einem im kontinuierlichen Verfahren hergestellten Endlosrohr abgelenkten Rohrabschnitt gebildet und ist an seiner Mantelfläche 11 mit einer Korrosionsschicht 12 versehen. In dem Polgehäuse 10 ist ein an sich bekannter elektrischer Anker 13 eingesetzt. Stirnseitig ist an dem Polgehäuse 10 ein im Wesentlichen ebenfalls topfförmiges Getriebegehäuse 20 befestigt, in welchem ein Getriebezahnrad 21 aufgenommen ist, das in einer mit einer Ankerwelle 22 des Ankers 2 verbundene Schnecke 23 eingreift. Die Ankerwelle 22 ist in dem Getriebegehäuse 20 in einem Kugellager 24 gelagert, das durch einen Haltebügel 25 in dem Getriebegehäuse 20 axial gesichert ist.

Die Ankerwelle 22 ist4 auf ihrer dem Getriebegehäuse 20 abgewandten Seite in dem Polgehäuse 10 mittels eines durch Presspassung montierten Zylinderlagers 26 gelagert. Das Zylinderlager 26 besteht aus einem Sintermetall. Der toroid- bzw. ringförmige Körper des Zylinderlagers 26 bildet ein Schmierstoffdepot.

Durch den großen Außendurchmesser des Zylinderlagers 26, der wesentlich größer ist als eine Länge L, wird vermieden, dass bei der Montage des Zylinderlagers 26 durch Presspassung eine Durchmesserverkleinerung des dem Außendurchmesser der Ankerwelle 22 entsprechenden Innendurchmessers dᵢ entsteht. Außerdem wird eine Montage der Ankerwelle 22 dadurch vereinfacht.

Der große Aussendruchmesser dₐ des eingepressten Zylinderlagers 26 ermöglicht insbesondere auch ein ausreichendes Polenvolumen für den Schmierstoff und stellt so eine gute Schmierung des Zylinderlagers 26 über einen langen Zeitraum sicher. Aufgrund der kleineren Länge L des Zylinderlagers 26 wirken sich die eventuellen Schiefstellungen der Ankerwelle 22 nicht nachteilig auf den Lauf der Antriebseinheit aus, da es aufgrund der Kürze des Zylinderlagers 26 praktisch nicht zu Verspannungen der Ankerwelle 22 in Zylinderlager 26 kommen kann.

Nicht dargestellt können zusätzliche Sicherungselemente zur Fixierung des Zylinderlagers 26 in seiner Position innerhalb des Polgehäuses 1 wie beispielsweise Federscheiben oder Spannringe vorgesehen sein.

Das Zylinderlager 26 kann in ein Montagelement 27, das ebenfalls zylinderförmig ausgebildet ist, eingefasst sein, um den Außendurchmesser des Zylinderlagers 26 variable gestalten zu können und damit auch die Schmiereigenschaften an die jeweiligen Einsatzbedingungen anpassen zu können und somit Materialkosten möglichst gering zu halten. Über das Montagelement 27 kann jedes Zylinderlager 26 unabhängig von dessen Außendurchmesser dₐ eingesetzt werden. Dazu kann das Montageelement 27 entweder als eine Art Kappe auf das Polgehäuse 10 aufgesetzt oder aufgeschraubt werden oder in das Polgehäuse 10 eingeschoben werden und darin fixiert werden, beispielsweise durch Bildung einer Presspassung zwischen Polgehäuse 10 und Montageelement 27. Das Montageelement 27 kann mit dem Zylinderlager 26 vormontiert an dem Polgehäuse befestigt werden. Es ist aber auch möglich, das Zylinderlager 26 zunächst an der Ankerwelle 22 vorzumontieren und anschließend in das Montageelement 27 einzusetzen oder auch jedes einzelne Bauteil direkt zu montieren.

## Patentansprüche

1. Scheibenwischervorrichtung (1) für Kraftfahrzeuge insbesondere für Heckscheibenwischer mit einem Wischermotor, welcher in einen Gehäusegrundkörper (20) eingesetzt ist, und einem Polgehäuse (10), welches einstückig und über den Umfang nahtfrei ausgebildet ist, **dadurch gekennzeichnet, dass** das Polgehäuse (10) aus einem von einem im kontinuierlichen Verfahren hergestellten Endlosrohr abgelängten Rohrabschnitt gebildet ist.

2. Scheibenwischervorrichtung (1) nach Anspruch 1,
**dadurch gekennzeichnet, dass** eine Mantelfläche (11) des Polgehäuses (10) mit einer Korrosionsschutzschicht (12) versehen ist.

3. Scheibenwischervorrichtung (1) nach Anspruch 1 oder 2,
**dadurch gekennzeichnet, dass** das Polgehäuse (10) aus Stahl, Sintermetall oder Keramik hergestellt ist.

4. Scheibenwischervorrichtung (1) nach einem der Ansprüche 1 bis 3,
**dadurch gekennzeichnet, dass** zur Befestigung einer Lagerung der in dem Polgehäuse (10) angeordneten Ankerwelle 22 ein Montageelement (27) an dem Polgehäuse (10) befestigbar ist.

5. Scheibenwischervorrichtung (1) nach Anspruch 4,
**dadurch gekennzeichnet, dass** in dem Montageelement (27) eine Öffnung vorgesehen ist, welche als Lagersitz dient, und deren Durchmesser an die Abmessung der Lagerung der Ankerwelle 22, insbesondere eines Zylinderlagers, (26) anpassbar ist.

6. Scheibenwischervorrichtung (1) nach Anspruch 4 oder 5,
**dadurch gekennzeichnet, dass** das Montageelement (27) durch Presspassung am Polgehäuse (10) montierbar ist.

7. Scheibenwischervorrichtung (1) nach einem der Ansprüche 4 bis 6,
**dadurch gekennzeichnet, dass** das Montageelement (27) mittels Sicherungselementen, insbesondere Federscheiben, in seiner Position am Polgehäuse (10) fixierbar ist.

8. Scheibenwischervorrichtung (1) nach einem der Ansprüche 4 bis 6,
**dadurch gekennzeichnet, dass** das Montageelement (27) auf das Polgehäuse (10), aufschiebbar und/oder aufschraubbar ist.

## Claims

1. Windshield wiper device (1) for motor vehicles, in particular for rear windshield wipers, comprising a wiper motor which is inserted into a housing base body (20), and a pole housing (10) which is configured integrally and seamlessly over the circumference, **characterized in that** the pole housing (10) is formed from a tubular portion made in a continuous process cut to length from an endless tube.

2. Windshield wiper device (1) according to Claim 1, **characterized in that** a peripheral surface (11) of the pole housing (10) is provided with an anti-corrosive layer (12).

3. Windshield wiper device (1) according to Claim 1 or 2, **characterized in that** the pole housing (10) is produced from steel, sintered metal or ceramics.

4. Windshield wiper device (1) according to one of Claims 1 to 3, **characterized in that**, for fastening a bearing arrangement of the armature shaft (22) arranged in the pole housing (10), a mounting element (27) can be fastened to the pole housing (10).

5. Windshield wiper device (1) according to Claim 4, **characterized in that**, in the mounting element (27), an opening is provided which serves as a bearing seat, and the diameter thereof can be adapted to the dimensions of the bearing arrangement of the armature shaft (22), in particular of a cylinder bearing (26).

6. Windshield wiper device (1) according to Claim 4 or 5, **characterized in that** the mounting element (27) can be mounted by an interference fit on the pole housing (10).

7. Windshield wiper device (1) according to one of Claims 4 to 6, **characterized in that** the mounting element (27) can be fixed by means of securing elements, in particular spring washers, in its position on the pole housing (10).

8. Windshield wiper device (1) according to one of Claims 4 to 6, **characterized in that** the mounting element (27) can be pushed and/or screwed onto the pole housing (10).

## Revendications

1. Dispositif d'essuie-glace (1) pour véhicules automobiles, en particulier pour essuie-glaces arrière, comprenant un moteur d'essuie-glace qui est inséré dans un corps de base de boîtier (20), et une carcasse polaire (10) qui est réalisée d'une seule pièce et sans joint sur la périphérie,
**caractérisé en ce que** la carcasse polaire (10) est formée à partir d'un tronçon de tube coupé à longueur dans un tube sans fin fabriqué dans un procédé continu.

2. Dispositif d'essuie-glace (1) selon la revendication 1,
**caractérisé en ce qu'**une surface extérieure (11) de la carcasse polaire (10) est pourvue d'une couche de protection anticorrosion (12).

3. Dispositif d'essuie-glace (1) selon la revendication 1 ou 2,
**caractérisé en ce que** la carcasse polaire (10) est fabriquée en acier, en métal fritté ou en céramique.

4. Dispositif d'essuie-glace (1) selon l'une quelconque des revendications 1 à 3,
**caractérisé en ce qu**'un élément de montage (27) peut être fixé à la carcasse polaire (10) pour la fixation d'un support de l'arbre d'induit (22) disposé dans la carcasse polaire (10).

5. Dispositif d'essuie-glace (1) selon la revendication 4,
**caractérisé en ce qu**'une ouverture est prévue dans l'élément de montage (27), laquelle ouverture sert de siège de palier et dont le diamètre peut être ajusté à la taille du support de l'arbre d'induit (22), en particulier d'un palier cylindrique (26).

6. Dispositif d'essuie-glace (1) selon la revendication 4 ou 5,
**caractérisé en ce que** l'élément de montage (27) peut être monté sur la carcasse polaire (10) par ajustement serré.

7. Dispositif d'essuie-glace (1) selon l'une quelconque des revendications 4 à 6,
**caractérisé en ce que** l'élément de montage (27) peut être fixé dans sa position sur la carcasse polaire (10) au moyen d'éléments de fixation, en particulier de rondelles élastiques.

8. Dispositif d'essuie-glace (1) selon l'une quelconque des revendications 4 à 6,
**caractérisé en ce que** l'élément de montage (27) peut être enfilé et/ou vissé sur la carcasse polaire (10).
